# EUROPÄISCHE PATENTSCHRIFT

(11) **EP 3 452 215 B1**
(45) Veröffentlichungstag und Bekanntmachung des Hinweises auf die Patenterteilung: **01.09.2021**
(21) Anmeldenummer: 17721619.9
(22) Anmeldetag: 02.05.2017
(51) Int. Cl.: B01J 29/56, B01J 29/072, B01D 53/86, B01D 53/90, F01N 3/20, B01J 29/70

(54) **SCR-AKTIVER KATALYSATOR**
ACTIVE SCR CATALYST
CATALYSEUR ACTIF POUR LA RÉDUCTION CATALYTIQUE SÉLECTIVE

(30) Priorität: 03.05.2016 EP 16168137
(43) Veröffentlichungstag der Anmeldung: 13.03.2019
(73) Patentinhaber: Umicore AG & Co. KG, 63457 Hanau-Wolfgang (DE)
(72) Erfinder: WEN, Fei, 63796 Kahl am Main (DE); SOEGER, Nicola, 61130 Nidderau (DE); GIESHOFF, Jürgen, 63571 Gelnhausen (DE)
(86) Internationale Anmeldenummer: PCT/EP2017/060379
(87) Internationale Veröffentlichungsnummer: WO 2017/191111

(56) Entgegenhaltungen:
- EP-A1- 2 985 068
- EP-A2- 2 520 365
- WO-A1-2010/043891
- WO-A1-2011/045252
- WO-A1-2013/082560
- DE-A1-102010 007 626
- US-A1- 2012 014 867
- BAERLOCHER CH ET AL: "Atlas of Zeolite Framework Types - Fifth Edition", ATLAS OF ZEOLITE FRAMEWORK TYPES, XX, XX, 2001, Seiten IV-VI,1, XP002978601,
- BAERLOCHER C ET AL: "ATLAS OF ZEOLITE FRAMEWORK TYPES, PASSAGE", 31. Dezember 2007 (2007-12-31), ATLAS OF ZEOLITE FRAMEWORK TYPES, ELSEVIER, PAGE(S) 140,381 - 386, XP002620500, das ganze Dokument

## Beschreibung

Die vorliegende Erfindung betrifft einen SCR-aktiven Katalysator zur Verminderung von Stickoxiden im Abgas von Verbrennungsmotoren.

Abgase von Kraftfahrzeugen mit einem überwiegend mager betriebenen Verbrennungsmotor enthalten neben Partikelemissionen insbesondere die Primäremissionen Kohlenmonoxid CO, Kohlenwasserstoffe HC und Stickoxide NOx. Aufgrund des relativ hohen Sauerstoffgehaltes von bis zu 15 Vol.-% können Kohlenmonoxid und Kohlenwasserstoffe durch Oxidation relativ leicht unschädlich gemacht werden. Die Reduktion der Stickoxide zu Stickstoff gestaltet sich jedoch wesentlich schwieriger.

Ein bekanntes Verfahren zur Entfernung von Stickoxiden aus Abgasen in Gegenwart von Sauerstoff ist die selektive katalytische Reduktion (SCR-Verfahren) mittels Ammoniak an einem geeigneten Katalysator. Bei diesem Verfahren werden die aus dem Abgas zu entfernenden Stickoxide mit Ammoniak zu Stickstoff und Wasser umgesetzt. Das als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Als SCR-Katalysatoren können beispielsweise bestimmte Metall-ausgetauschte Zeolithe verwendet werden. Zeolithe werden oftmals nach der Ringgröße ihrer größten Porenöffnungen in groß-, mittel- und kleinporige Zeolithe unterteilt. Großporige Zeolithe weisen eine maximale Ringgröße von 12 und mittelporige Zeolithe eine solche von 10 auf. Kleinporige Zeolithe weisen eine maximale Ringgröße von 8 auf.

Im Bereich Schwerlastkraftwagen wurden in der Vergangenheit in großem Umfang SCR-Katalysatoren auf Basis von Eisen-ausgetauschten β-Zeolithen, also eines großporigen Zeolithen, verwendet. Bei diesen Produkten wird allerdings mit zunehmender Einsatzdauer eine relativ stark ausgeprägte Agglomerierung von Eisenteilchen, sowie eine Dealuminierung der Zeolith-Struktur beobachtet. Die hydrothermale Stabilität von auf Eisen-ausgetauschten β-Zeolithen basierten SCR-Katalysatoren kann somit gesteigerten Anforderungen nicht genügen.

Es sind auch schon SCR-Katalysatoren auf Basis kleinporiger Zeolithe bekannt, siehe beispielsweise US2014/154175, WO2010/043891 A1, WO2008/106519 A1, WO2008/118434 A1 und WO2008/132452 A2. Letztgenannte Schrift offenbart eine große Anzahl kleinporiger Zeolithe, u.a. auch die Strukturtypen EAB, ERI und LEV. Allerdings hat sich herausgestellt, dass SCR-Katalysatoren auf Basis von Eisen-ausgetauschten kleinporigen Zeolithen Schwächen im frischen Zustand aufweisen.

SCR-Katalysatoren auf Basis Kupfer-ausgetauschter kleinporiger Zeolithe, insbesondere auf Basis von Kupfer-ausgetauschtem Chabazit, sind aus den oben genannten Dokumenten, sowie aus EP 2 878 361 A1 ebenso bereits bekannt.

Es ist aus der EP 2520365 A2 auch schon bekannt, ein erstes Molekularsieb, das ein erstes Metall enthält, mit einem zweiten Molekularsieb zu mischen, das ein zweites Metall enthält.

Die WO2013/126619 A1 offenbart darüber hinaus bereits Zeolithe, die mit zwei Metallen, beispielsweise Eisen und Kupfer, ausgetauscht sind. Gemäß dieser Schrift weist mit Eisen und Kupfer ausgetauschter Chabazit (SSZ-13, siehe Beispiele 1 bis 3) Vorteile auf, wenn im Abgas gleiche Teile NO und NO₂ enthalten sind und somit die sogenannte schnelle SCR-Reaktion nach der Reaktionsgleichung

4 NH₃ + 2 NO + 2 NO₂ → 4 N₂ + 6 H₂O

ablaufen kann.

Die US 2015/290632 beschreibt ein CuFe/CHA System, wobei Eisen während der Chabazit-Synthese und Kupfer in einem nachfolgenden Ionenaustausch-Schritt eingebaut werden. Dieses Produkt weist in gealtertem Zustand im Vergleich zu Cu/CHA eine bessere SCR-Aktivität im Temperaturbereich > 350°C, aber eine schlechtere SCR-Aktivität im Temperaturbereich < 350°C auf.

Die WO 2013/082560 A1 beschreibt ein mikroporöses kristallines Material, ausgewählt aus CHA, LEV, AEI, AFT, AFX, EAB, ERI, KFI, SAT, TSC und SAV mit einer Porenweite zwischen 3 und 5 Å. Das Material umfasst ferner ein erstes Metall, ausgewählt aus Alkalimetallen, Erdalkalimetallen, Seltenerdmetallen oder Gemischen davon, sowie ein zweites Metall, ausgewählt aus Kupfer, Eisen und Gemischen davon. Die Beispiele zeigen die Vorteilhaftigkeit eines mit Eisen und Calcium promotierten Chabaziten im Vergleich zu einem lediglich mit Eisen promotieren Chabaziten sowie die Vorteilhaftigkeit eines mit Kupfer und Calcium promotierten Chabaziten im Vergleich zu einem lediglich mit Kupfer promotierten Chabaziten. Des Weiteren wird ein Verfahren zu selektiven katalytischen Reduktion vom Stickoxiden im Abgas offenbart, wobei das Abgas mit einer Vorrichtung in Kontakt gebracht wird, die das erfindungsgemäße mikroporöse kristalline Material enthält.

Die WO 2010/043891 A1 offenbart einen synthetischen Aluminosilikat-Zeolithen, der mindestens ein katalytisch aktives Übergangsmetall enthält, ausgewählt aus Cu, Fe, Hf, La, Au, In, V, Lanthaniden und Übergangsmetallen der Gruppe VIII. Der Zeolith ist kleinporig, und seine mittlere Kristallitgröße beträgt >0.5 Mikrometer. Bei dem kleinporigen Zeolithen kann es sich um CHA, ERI oder LEV handeln. Die WO 2010/043891 A1 differenziert nicht zwischen ERI und LEV einerseits und CHA anderseits und macht auch keine Angaben zur Kanalweite. Die Ausführungsbeispiele beziehen sich ausschließlich auf mit Kupfer promotierte Chabazite.

Die WO 2011/045252 A1 beschreibt einen Kupfer enthaltenden Levyn mit einem SAR-Wert von weniger als 30 und einem Cu:Al-Atomverhältnis kleiner als 0.45. Zusätzlich zu Kupfer kann der Levyn mit einem weiteren Metall, ausgewählt aus Fe, Co, Ni, Zn, Y, Ce, Zr und V, promotiert sein. Nach Exposition mit Temperatur von etwa 750°C bis etwa 950°C in Gegenwart von bis zu 10 Volumenprozent Wasser über einen Zeitraum von ungefähr 1 h bis ungefähr 48 h behält das Molekularsieb vom Levyn-Typ mindestens 60 % seiner Oberfläche.

Die US 2012/014867 A1 offenbart ein Kupfer enthaltendes zeolithisches Material, wobei es sich bei dem Zeolithen um ERI, OFF oder ZSM-34 handelt. ZSM-34 ist ein Intergrowth aus ERI und OFF. Offretit ist ein mittel- und kein kleinporiger Zeolith ist. Die Zeolithe können einen Alkalimetallgehalt, berechnet als Alkalimetalloxid, von weniger als 0,7 Gew.-% aufweisen, bevorzugt von weniger als 0,5 Gew.-%. Es wird als vorteilhaft betrachtet, den Alkalimetallgehalt der Zeolithe gering zu halten. Es gibt in der US 2012/014867 A1 jedoch keinen Hinweis darauf, dass es vorteilhaft sein könnte, den Zeolithen mit Kupfer und Eisen zu promotieren und dass besonders vorteilhaft außer Kupfer und Eisen keine weiteren Metalle im Zeolithen enthalten sein sollen. Des Weiteren findet sich kein Hinweis auf die Bedeutung der Kanalweite.

EP 2 985 068 A1 offenbart ein Katalysatorsystem zu Reduktion von Stickoxiden, das einen Stickoxidspeicherkatalysator und einen SCR-Katalysator umfasst. Der SCR-Katalysator kann einen Zeolithen enthalten, der dem Gerüsttyp AEI, CHA, KFI, ERI, LEV, MER oder DDR angehört und mit Kobalt, Eisen, Kupfer oder Mischungen aus zwei oder drei dieser Metalle ausgetauscht ist. Es wird nicht im Hinblick auf die Kanalweite der Zeolithe unterschieden, vor allem nicht zwischen CHA einerseits und LEV und ERI andererseits.

EP 2 520 365 A2 offenbart einen SCR-Katalysator, der ein oder mehrere Zeolithe des MFI-Gerüsttyps und ein oder mehrere Zeolithe des CHA-Gerüsttyps umfasst. Wenigstens ein Teil der Zeolithe des MFI-Gerüsttyps enthält Eisen, und wenigstens ein Teil der Zeolithe des CHA-Gerüsttyps enthält Kupfer. Es sind keine Zeolithe offenbart, die sowohl mit Kupfer als auch mit Eisen promotiert sind. MFI ist ein großporiger Zeolith, und CHA gehört aufgrund seiner zu geringen Kanalweite nicht zu den kleinporigen Zeolithen im Sinne der vorliegenden Erfindung.

DE 10 2010 007 626 A1 offenbart einen kupferhaltigen Zeolithen vom KFI-Typ, der 1 bis 4,5 Gew.-% Kupfer enthält. Optional kann er zusätzlich Eisen enthalten. Laut DE 10 2010 007 626 A1 ist es schwierig, einen kupferhaltigen Zeolithen von KFI-Typ in hoher Reinheit zu erhalten. Häufig treten Phasenverunreinigungen durch MER, CHA, ERI und LTL auf. Das offenbarte Verfahren zur Herstellung von KFI beschränkt Verunreinigungen jedoch auf MER. Bei einer thermischen oder Hydrothermalbehandlung des so erhaltenen, mit MER verunreinigten KFI zersetzt sich die MER-Phase langsam. Die Ausführungsbeispiele beschreiben die Synthese eines mit Kupfer beladenen KFI sowie dessen Verhalten in der Abgaskatalyse. Ein zusätzlich mit Eisen beladener KFI wird nicht offenbart. Aufgabe der DE 10 2010 007 626 A1 ist es somit, einen mit Kupfer beladenen KFI mit geringen Phasenverunreinigungen herzustellen, der gute NOx-Konversionsraten aufweist. Es werden Kristallitgrößen offenbart, welche die bevorzugte KFI-Kristalle aufweisen sollen, es gibt jedoch keinerlei Angaben zu den Kanalweiten.

Es besteht weiterhin Bedarf nach SCR-Katalysatoren für den Schwerkraftbereich, die sich durch ausreichende Aktivität im frischen Zustand und durch hohe hydrothermale Stabilität auszeichnen. Insbesondere sollen geeignete Katalysatoren auch in der sogenannten Standard-SCR-Reaktion nach der Reaktionsgleichung

4 NH₃ + 4 NO + O₂ → 4 N₂ + 6 H₂O

also in Abwesenheit von NO₂, ausreichend SCR-aktiv sein.

Es wurde nun überraschend gefunden, dass SCR-Katalysatoren auf Basis bestimmter kleinporiger Zeolithe, die sowohl mit Eisen, als auch mit Kupfer ausgetauscht sind, diese Anforderungen erfüllen.

Die vorliegende Erfindung betrifft einen Katalysator, der einen kleinporigen, Eisen und Kupfer enthaltenden Zeolithen mit einer maximalen Ringgröße von acht tetraedrischen Atomen umfasst, dadurch gekennzeichnet, dass der kleinporige Zeolith vom Strukturtyp EAB, ERI, ESV, JBW oder LEV ist und dass die Kanalweite des kleinporige Zeolithen in mindestens einer Dimension > 3,8 Ä (0,38 nm) ist und dass der kleinporige Zeolith Kupfer in einer Menge von 0,2 bis 3 Gew.-%, berechnet als Cu und Eisen in einer Menge von 0,2 bis 3 Gew.-%, berechnet als Fe, aufweist, jeweils bezogen auf das Gesamtgewicht des ausgetauschten kleinporigen Zeolithen, und wobei der kleinporige Zeolith außer Kupfer und Eisen kein weiteres Metall enthält.

Im Rahmen der vorliegenden Erfindung ist unter dem Begriff "Kanalweite" der in Ch. Baerlocher, Atlas of Zeolite Framework Types, 6th revised edition 2007, definierte "crystallographic free diameter of the channels" zu verstehen (siehe Seite 8).
Erfindungsgemäß muss die Kanalweite in mindestens einer Dimension > 3,8 Ä sein. Die Kanalweite in der anderen Dimension ist im Rahmen vorliegender Erfindung unkritisch.

In einer Ausführungsform der vorliegenden Erfindung ist die Kanalweite des kleinporigen Zeolithen in mindestens einer Dimension ≥ 4,7 Å (0,47 nm). Kleinporige Zeolithe mit einer maximalen Ringgröße von acht tetraedrischen Atomen und einer Kanalweite in mindestens einer Dimension > 3,8 Å sind in Appendix E des Atlas of Zeolite Framework Types identifiziert.

In Ausführungsformen der vorliegenden Erfindung ist der kleinporige Zeolith mit einer maximalen Ringgröße von acht tetraedrischen Atomen und einer Kanalweite in mindestens einer Dimension > 3,8 Å vom Strukturtyp EAB (Kanalweite in mindestens einer Dimension von 5,1 Ä), ERI (Kanalweite in mindestens einer Dimension von 5,1 Ä), ESV (Kanalweite in mindestens einer Dimension von 4,7 Ä), JBW (Kanalweite in mindestens einer Dimension von 4,8 Ä) oder LEV (Kanalweite in mindestens einer Dimension von 4,8 Ä), wobei ERI und LEV bevorzugt sind.
Die Kanalweite von CHA ist in beiden Dimensionen 3,8 Ä, so dass dieser Strukturtyp nicht im Umfang der vorliegenden Erfindung liegt.

Als Zeolith vom EAB-Strukturtyp können alle dem Fachmann bekannten Zeolithe dieses Typs verwendet werden. Beispiele sind TMA-E und Bellbergite.
Als Zeolith vom ERI-Strukturtyp können alle dem Fachmann bekannten Zeolithe dieses Typs verwendet werden. Dazu gehören natürlich vorkommende, bevorzugt aber synthetisch hergestellte Erionite. Beispiel sind Linde T, LZ-220 und ZSM-34, insbesondere aber als "Erionit" bezeichnete Materialien.
Als Zeolith vom ESV-Strukturtyp können alle dem Fachmann bekannten Zeolithe dieses Typs verwendet werden. Ein Beispiel ist ERS-7.
Als Zeolith vom JBW-Strukturtyp können alle dem Fachmann bekannten Zeolithe dieses Typs verwendet werden. Ein Beispiel ist Na-J.
Als Zeolith vom LEV-Strukturtyp können alle dem Fachmann bekannten Zeolithe dieses Typs verwendet werden. Beispiele sind Nu-3, ZK-20, RUB-1 und LZ-132, insbesondere aber als "Levyne" bezeichnete Materialien.

Im Rahmen der vorliegenden Erfindung werden unter dem Begriff Zeolith nicht nur Aluminosilikate, sondern auch sogenannte Zeolith-ähnliche Verbindungen vom Typ Silicoaluminophosphat oder Aluminophosphat verstanden, soweit sie eine erfindungsgemäße Struktur aufweisen. Beispiele vom ERI-Strukturtyp sind SAPO-17 und AIPO-17 und vom LEV-Strukturtyp SAPO-35 und AIPO-35.
In Ausführungsformen der vorliegenden Erfindung weist der kleinporige Zeolith einen SAR-Wert von 1 bis 50, bevorzugt von 5 bis 35 auf. Unter dem SAR-Wert versteht der Fachmann das molare Siliziumoxid/Aluminiumoxid-Verhältnis (silica to alumina ratio).
In bevorzugten Ausführungsformen der vorliegenden Erfindung ist der kleinporige Zeolith vom Strukturtyp ERI und weist einen SAR-Wert von 5 bis 15, insbesondere von 5 bis 10 auf.
In weiteren bevorzugten Ausführungsformen der vorliegenden Erfindung ist der kleinporige Zeolith vom Strukturtyp LEV und weist einen SAR-Wert von 20 bis 40, beispielsweise von 30 bis 40 oder von 25 bis 35 oder von 30 bis 35 auf.

Der kleinporige Zeolith enthält Kupfer in einer Menge von 0,2 bis 3 Gew.-%, bevorzugt 1 bis weniger als 2 Gew.-%, etwa 1 bis 1,9 Gew.-%, berechnet als Cu und Eisen in einer Menge von 0,2 bis 3 Gew.-%, bevorzugt 1 bis 2 Gew.-%, berechnet als Fe und jeweils bezogen auf das Gesamtgewicht des ausgetauschten Zeolithen.
Besonders bevorzugt enthält der kleinporige Zeolith Kupfer in einer Menge von 1,5 Gew.-% berechnet als Cu und Eisen in einer Menge von 1,3 Gew.-%, berechnet als Fe und jeweils bezogen auf das Gesamtgewicht des ausgetauschten Zeolithen. In dieser Ausführungsform beträgt das Atomverhältnis Kupfer zu Eisen 1.

In bevorzugten Ausführungsformen der vorliegenden Erfindung ist der kleinporige Zeolith vom Strukturtyp ERI und das molare Verhältnis von Cu:Al ist 0,03 bis 0,10, insbesondere 0,05 bis 0,09. Das molare Verhältnis von (Cu+Fe):Al ist 0,12 bis 0,2, insbesondere von 0,13 bis 0,17.
In weiteren bevorzugten Ausführungsformen der vorliegenden Erfindung ist der kleinporige Zeolith vom Strukturtyp LEV und das molare Verhältnis von Cu:Al ist 0,15 bis 0,30, insbesondere 0,18 bis 0,25. Das molare Verhältnis von (Cu+Fe):Al ist 0,32 bis 0,50, insbesondere von 0,39 bis 0,47.

Der kleinporige Zeolith enthält, außer Kupfer und Eisen kein weiteres Metall. Insbesondere enthält der kleinporige Zeolith kein Alkalimetall, kein Erdalkalimetall und kein Seltenerdmetall. Darüber hinaus enthält der kleinporige Zeolith insbesondere kein Kobalt.

Der erfindungsgemäße Katalysator kann in einfacher Weise nach an sich bekannten Verfahren hergestellt werden.
Beispielsweise kann er mittels Festkörper-Sublimation erhalten werden. Dazu wird eine trockene, innige Mischung eines kleinporigen Zeolithen mit einer Kupfer- und mit einer Eisen-Verbindung, beispielsweise den jeweiligen Acetylacetonaten, bereitgestellt, die anschließend bei Temperaturen vom 100 bis 600°C zum Metall oder Metall-Ion zersetzt wird. Anschließend wird bei einer Temperatur und für eine Zeitdauer kalziniert, die hoch genug bzw. lange genug ist, um die Festkörper-Sublimation von Kupfer und Eisen in den kleinporigen Zeolithen zu bewerkstelligen.
Das resultierende Pulver wird dann in Wasser dispergiert und mit Binder, beispielsweise Boehmit oder Silicagel, versetzt. Die erhaltene Mischung muss dann nur noch gerührt bzw. homogenisiert werden und kann direkt als Beschichtungssuspension (Washcoat) zur Beschichtung eines Trägersubstrates verwendet werden.
Alternativ können die erfindungsgemäßen Katalysatoren auch dadurch hergestellt werden, dass ein kleinporiger Zeolith, beispielsweise in seiner Natrium-, Kalium- oder Ammonium-Form, in Wasser aufgeschlämmt wird und dann mit den entsprechenden Mengen löslicher Kupfer- und Eisensalze versetzt wird. Als lösliche Salze werden insbesondere die Acetate verwendet.

In Ausführungsformen des erfindungsgemäßen Katalysators liegt er in Form einer Beschichtung auf einem Trägersubstrat vor. Trägersubstrate können sogenannte Durchflusssubstrate oder auch Wandflussfilter sein.
Beide können aus inerten Materialien, beispielsweise aus Silicium-Carbid, Aluminium-Titanat oder Cordierit, bestehen. Solche Trägersubstrate sind dem Fachmann bekannt und am Markt erhältlich.

Die Trägersubstrate können aber auch selbst katalytisch aktiv sein und SCR-katalytisch aktives Material enthalten. Als SCR-katalytisch aktive Materialien für diesen Zweck kommen grundsätzlich alle dem Fachmann bekannten Materialien in Frage, also beispielsweise solche auf Mischoxid-Basis und solche auf Basis metallausgetauschter, insbesondere Cu- und/oder Fe-ausgetauschter, zeolithischer Verbindungen. Insbesondere kommen für diesen Zweck Mischoxide in Frage, die Vanadium-, Titan- und Wolframverbindungen enthalten.
Neben dem katalytisch aktiven Material enthalten diese Trägersubstrate eine Matrixkomponente. Als Matrixkomponenten können alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

In anderen Ausführungsformen des erfindungsgemäßen Katalysators liegt er selbst als Bestandteil eines Trägersubstrates vor, also zum Beispiel eines Durchflusssubstrates oder auch Wandflussfilters. Solche Trägersubstrate enthalten daneben die schon oben beschriebenen Matrixkomponenten.

Erfindungsgemäße Katalysatoren enthaltende Trägersubstrate können als solche bei der Abgasreinigung eingesetzt werden. Sie können aber auch ihrerseits mit katalytisch aktiven Materialien, zum Beispiel SCR-katalytisch aktiven Materialien, beschichtet werden. Soweit diese Materialien SCR-katalytisch aktiv sein sollen, kommen die oben genannten SCR-Katalysatoren in Frage.

Zur Herstellung katalytisch aktiver Trägersubstrate wird zum Beispiel eine Mischung aus beispielsweise 10 bis 95 Gew.-% inerter Matrixkomponente und 5 bis 90 Gew.-% katalytisch aktiven Materials nach an sich bekannten Verfahren extrudiert. Wie bereits oben beschrieben können als Matrixkomponenten alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

Das Aufbringen des erfindungsgemäßen Katalysators auf das inerte oder selbst katalytisch aktive Trägersubstrat, sowie das Aufbringen einer katalytisch aktiven Beschichtung auf ein Trägersubstrat, das einen erfindungsgemäßen Katalysator umfasst, kann nach dem Fachmann geläufigen Methoden erfolgen, so etwa nach den üblichen Tauchbeschichtungsverfahren bzw. Pump- und Saug-Beschichtungsverfahren mit sich anschließender thermischer Nachbehandlung (Kalzination).
Dem Fachmann ist bekannt, dass im Falle von Wandflussfiltern dessen durchschnittliche Porengröße und die mittlere Teilchengröße des erfindungsgemäßen Katalysators so aufeinander abgestimmt werden können, dass die resultierende Beschichtung auf den porösen Wänden, die die Kanäle des Wandflussfilters bilden, liegen (auf-Wand-Beschichtung). Bevorzugt werden aber durchschnittliche Porengröße und mittlere Teilchengröße so aufeinander abgestimmt, dass sich der erfindungsgemäße Katalysator in den porösen Wänden, die die Kanäle des Wandflussfilters bilden, befinden, dass also eine Beschichtung der inneren Porenoberflächen erfolgt (in-Wand-Beschichtung). In diesem Fall muss die mittlere Teilchengröße des erfindungsgemäßen Katalysators klein genug sein, um in die Poren des Wandflussfilters einzudringen.

Der erfindungsgemäße Katalysator kann mit Vorteil zur Reinigung von Abgas von mager betriebenen Verbrennungsmotoren, insbesondere von Dieselmotoren, verwendet werden. Er setzt im Abgas enthaltene Stickoxide in die unschädlichen Verbindungen Stickstoff und Wasser um.

Die vorliegende Erfindung betrifft demnach auch ein Verfahren zur Reinigung von Abgas von mager betriebenen Verbrennungsmotoren, das dadurch gekennzeichnet ist, dass das Abgas über einen erfindungsgemäßen Katalysator geleitet wird.

Als Reduktionsmittel wird bei dem erfindungsgemäßen Verfahren bevorzugt Ammoniak verwendet. Der benötigte Ammoniak kann beispielsweise im Abgassystem anströmseitig zum erfindungsgemäßen Partikelfilter etwa mittels eines anströmseitigen Stickoxidspeicherkatalysators ("lean NOx trap - LNT) gebildet werden. Dieses Verfahren ist als "passive SCR" bekannt. Ammoniak kann aber auch in geeigneter Form, wie zum Beispiel in Form von Harnstoff, Ammoniumcarbamat oder Ammoniumformiat, mitgeführt und bei Bedarf dem Abgasstrom zugegeben werden. Es ist weit verbreitet, wässrige Harnstofflösung mitzuführen und diese bedarfsgerecht über einen Injektor anströmseitig in den erfindungsgemäßen Katalysator einzudosieren.

Die vorliegende Erfindung betrifft somit auch ein System zur Reinigung von Abgas von mager betriebenen Verbrennungsmotoren, das dadurch gekennzeichnet ist, dass es einen erfindungsgemäßen Katalysator, bevorzugt in Form einer Beschichtung auf einem Trägersubstrat oder als Bestandteil eines Trägersubstrats, sowie einen Injektor für wässrige Harnstofflösung umfasst, wobei sich der Injektor vor dem erfindungsgemäßen Katalysator befindet.

Beispielsweise aus SAE-2001-01-3625 ist bekannt, dass die SCR-Reaktion mit Ammoniak schneller verläuft, wenn die Stickoxide in einer 1:1 Mischung aus Stickstoffmonoxid und Stickstoffdioxid vorliegen oder jedenfalls diesem Verhältnis nahekommen. Da das Abgas von mager betriebenen Verbrennungsmotoren in der Regel einen Überschuss von Stickstoffmonoxid gegenüber Stickstoffdioxid aufweist, schlägt das Dokument vor, den Anteil an Stickstoffdioxid mit Hilfe eines Oxidationskatalysators zu erhöhen. Der erfindungsgemäße Verfahren kann nicht nur in der Standard-SCR-Reaktion, d.h. in Abwesenheit von Stickstoffdioxid verwendet werden, sondern auch in der schnellen SCR-Reaktion, d.h. wenn ein Teil des Stickstoffmonoxid zu Stickstoffdioxid oxidiert wurde, so dass idealerweise eine 1:1 Mischung aus Stickstoffmonoxid und Stickstoffdioxid vorliegt.

Die vorliegende Erfindung betrifft somit auch ein System zur Reinigung von Abgas von mager betriebenen Verbrennungsmotoren, das dadurch gekennzeichnet ist, dass es einen Oxidationskatalysator, einen Injektor für wässrige Harnstofflösung und einen erfindungsgemäßen Katalysator, bevorzugt in Form einer Beschichtung auf einem Trägersubstrat oder als Bestandteil eines Trägersubstrats, aufweist.
Als Oxidations-katalysator wird Platin auf einem Trägermaterial verwendet. Als Trägermaterial für das Platin kommen alle dem Fachmann für diesen Zweck geläufigen Materialien in Betracht. Sie weisen eine BET-Oberfläche von 30 bis 250 m²/g, bevorzugt von 100 bis 200 m²/g auf (bestimmt nach DIN 66132) und sind insbesondere Aluminiumoxid, Siliziumoxid, Magnesiumoxid, Titanoxid,Zirkonoxid, Ceroxid sowie Mischungen oder Mischoxide aus mindestens zwei dieser Oxide.
Bevorzugt sind Aluminiumoxid und Aluminium/Silizium-Mischoxide. Sofern Aluminiumoxid verwendet wird, so ist es besonders bevorzugt stabilisiert, beispielsweise mit Lanthanoxid.
Das erfindungsgemäße System wird so verwendet, dass in Strömungsrichtung des Abgases ein Oxidationskatalysator, dann ein Injektor für wässrige Harnstofflösung und schließlich ein erfindungsgemäßer Katalysator angeordnet sind.

Der erfindungsgemäße Katalysator weist in überraschender Weise Vorteile im Vergleich mit kleinporigen Zeolithen auf, die nur mit Kupfer oder nur mit Eisen ausgetauscht sind. Er weist darüber hinaus auch Vorteile im Vergleich zu Zeolithen vom Chabazit-Typ auf, die mit Kupfer und Eisen ausgetauscht sind.

Die Erfindung wird in den nachstehenden Beispielen und Figuren näher erläutert.
- Figur 1: zeigt die SCR-Aktivität von K1, VK1 und VK2 in frischem Zustand
- Figur 2: zeigt die SCR-Aktivität von K1, VK1 und VK2 in gealtertem Zustand
- Figur 3: zeigt die SCR-Aktivität von K2, VK3 und VK4 in frischem Zustand
- Figur 4: zeigt die SCR-Aktivität von K2, VK3 und VK4 in gealtertem Zustand
- Figur 5: zeigt die SCR-Aktivität von VK5, VK6 und VK7 in frischem Zustand
- Figur 6: zeigt die SCR-Aktivität von VK5, VK6 und VK7 in gealtertem Zustand

### Beispiel 1

1,24 g Kupfer-Acetylacetonat (24,4 Gew.-% Cu) und 1,65 Eisen-Acetylacetonat (15,8 Gew.-% Fe) wurden mit 19,8 g eines Erionit mit einem SAR-Wert von 8 grob gemischt, homogenisiert und dann für 2 Stunden bei 550°C kalziniert. Es resultierten ungefähr 20 g eines mit 1,5 Gew.-% Kupfer und 1,3 Gew.-% Eisen ausgetauschten Erioniten, der nachfolgend K1 genannt wird.

### Vergleichsbeispiel 1

Das in Beispiel 1 beschriebene Verfahren wurde wiederholt mit dem Unterschied, dass das Eisen-Acetylacetonat weggelassen wurde. Es resultierten ungefähr 20 g eines mit 1,5 Gew.-% Kupfer ausgetauschten Erioniten, der nachfolgend VK1 genannt wird.

### Vergleichsbeispiel 2

Das in Beispiel 1 beschriebene Verfahren wurde wiederholt mit dem Unterschied, dass das Kupfer-Acetylacetonat weggelassen und Eisen-Acetylacetonat in einer Menge von 2,53 g eingesetzt wurde. Es resultierten ungefähr 20 g eines mit 2,0 Gew.-% Eisen ausgetauschten Erioniten, der nachfolgend VK2 genannt wird.

### Beispiel 2

Das in Beispiel 1 beschriebene Verfahren wurde wiederholt mit dem Unterschied, dass an Stelle von Erionit 19,8 g eines Levyne mit einem SAR-Wert von 30 eingesetzt wurden. Es resultierten ungefähr 20 g eines mit 1,5 Gew.-% Kupfer und 1,3 Gew.-% Eisen ausgetauschten Levyne, der nachfolgend K2 genannt wird.

### Vergleichsbeispiel 3

Das in Beispiel 2 beschriebene Verfahren wurde wiederholt mit dem Unterschied, dass das Eisen-Acetylacetonat weggelassen wurde. Es resultierten ungefähr 20 g eines mit 1,5 Gew.-% Kupfer ausgetauschten Levyne, der nachfolgend VK3 genannt wird.

### Vergleichsbeispiel 4

Das in Beispiel 2 beschriebene Verfahren wurde wiederholt mit dem Unterschied, dass das Kupfer-Acetylacetonat weggelassen und Eisen-Acetylacetonat in einer Menge von 2,53 g eingesetzt wurde. Es resultierten ungefähr 20 g eines mit 2,0 Gew.-% Eisen ausgetauschten Levyne, der nachfolgend VK4 genannt wird.

### Vergleichsbeispiel 5

Das in Beispiel 1 beschriebene Verfahren wurde wiederholt mit dem Unterschied, dass an Stelle von Erionit 19,8 g eines Chabaziten mit einem SAR-Wert von 28 eingesetzt wurden. Es resultierten ungefähr 20 g eines mit 1,5 Gew.-% Kupfer und 1,3 Gew.-% Eisen ausgetauschten Chabazit, der nachfolgend VK5 genannt wird.

### Vergleichsbeispiel 6

Das in Vergleichsbeispiel 5 beschriebene Verfahren wurde wiederholt mit dem Unterschied, dass das Eisen-Acetylacetonat weggelassen wurde. Es resultierten ungefähr 20 g eines mit 1,5 Gew.-% Kupfer ausgetauschten Chabazit, der nachfolgend VK6 genannt wird.

### Vergleichsbeispiel 7

Das in Vergleichsbeispiel 5 beschriebene Verfahren wurde wiederholt mit dem Unterschied, dass das Kupfer-Acetylacetonat weggelassen und Eisen-Acetylacetonat in einer Menge von 2,53 g eingesetzt wurde. Es resultierten ungefähr 20 g eines mit 2,0 Gew.-% Eisen ausgetauschten Chabazit, der nachfolgend VK7 genannt wird.

### Vergleichsversuche

a) Die Katalysatoren K1 und K2, sowie VK1 bis VK7 wurden frisch und verglichen. Die Alterung wurde bei 580°C in 10% H₂O und 10% O₂ in N₂ für 100 Stunden durchgeführt.
b) Die SCR-Aktivität der gealterten Katalysatoren K1 und K2, sowie VK1 bis VK7 wurde in einem Festbett-Quartzreaktor unter den in nachstehender Tabelle angegebenen Bedingungen getestet.

Dazu wurden zunächst die Katalysatorpulver gesiebt und die Fraktion von 500 bis 700 µm für die Tests verwendet.

Sodann wurde in N₂ auf 600°C aufgeheizt, dann auf das Testgas (siehe nachstehende Tabelle) und mit 2K/min auf 100°C abgekühlt.

Währenddessen wurde die Umsetzung von NO mit NH₃ mittels on-line FT-IR verfolgt.

| Gas / Parameter | Konzentration / Bedingungen |
|---|---|
| NH₃ | 450 ppm |
| NO | 500 ppm |
| H₂O | 5 % |
| O₂ | 5 % |
| N2 | Rest |
| Temperatur | Abkühlung 600 bis 100 °C @ -2 °C / min |
| Raumgeschwindigkeit | 130,000 h⁻¹ |

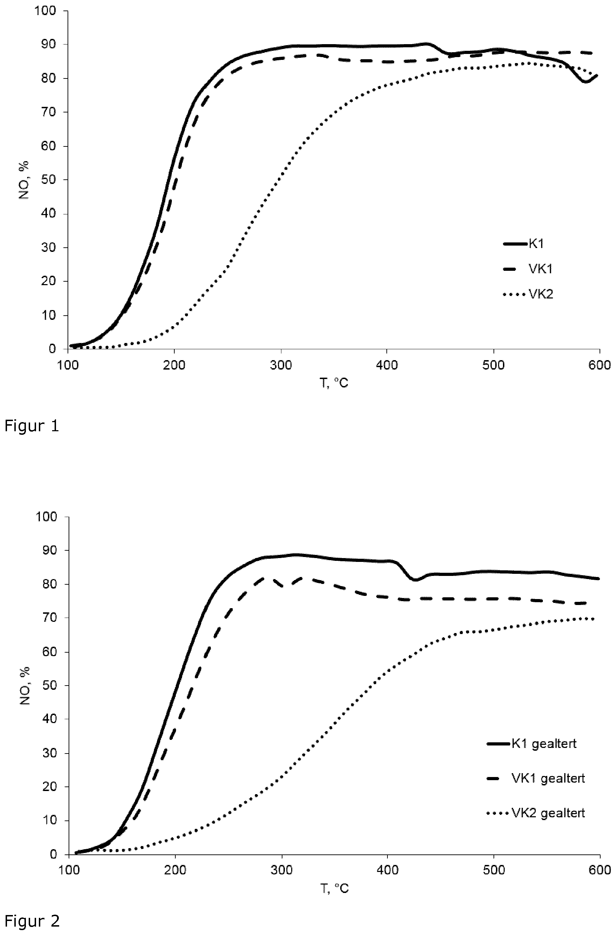

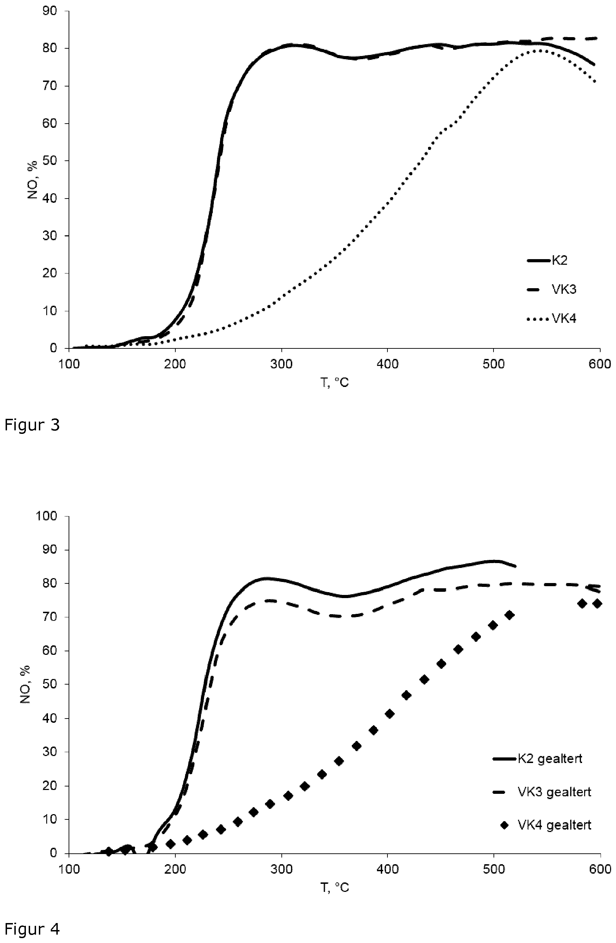

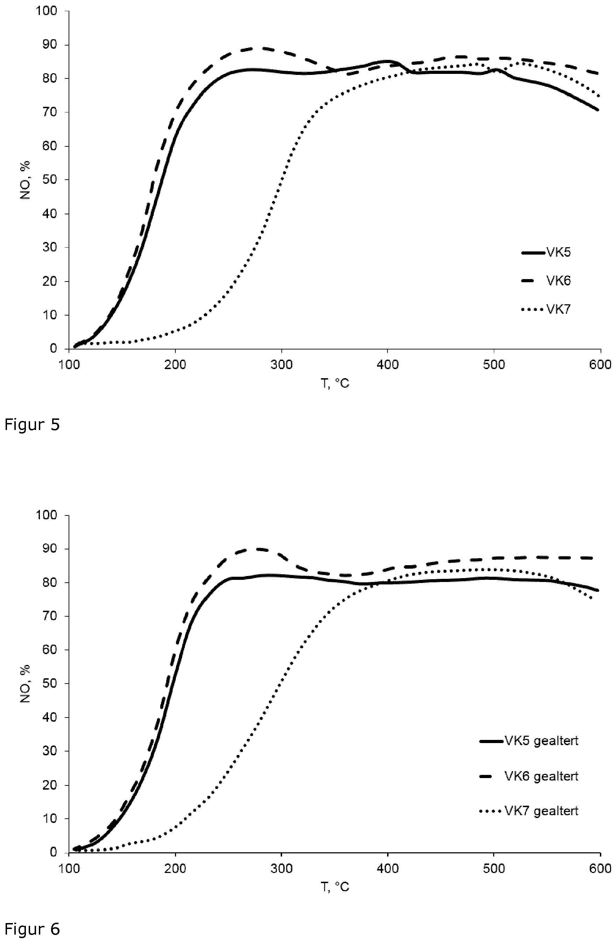

Die Ergebnisse sind den Figuren 1 bis 6 gezeigt.

Demnach zeigt K1 (Kupfer und Eisen enthaltender Erionit) bereits in frischem Zustand deutliche Vorteile gegen VK1 (Kupfer enthaltender Erionit) und VK2 (Eisen enthaltender Erionit), die sich in gealtertem Zustand noch verstärken. Ein ähnliches Bild ergibt sich beim Vergleich von K2 (Kupfer und Eisen enthaltender Levyne) mit VK3 (Kupfer enthaltender Levyne) und VK4 (Eisen enthaltender Levyne). Während K2 und VK3 in frischem Zustand ungefähr gleiche Ergebnisse liefern, weist im gealterten Zustand K2 deutliche Vorteile auf.

Ein anderes Bild ergibt sich beim Vergleich der Chabazit-haltigen VK5, VK6 und VK7. Hier liefert der nur Kupfer enthaltende VK6 in frischem und im gealterten Zustand die besten Ergebnisse.

## Patentansprüche

1. Katalysator, der einen kleinporigen, Eisen und Kupfer enthaltenden Zeolithen mit einer maximalen Ringgröße von acht tetraedrischen Atomen umfasst, **dadurch gekennzeichnet, dass** der kleinporige Zeolith vom Strukturtyp EAB, ERI, ESV, JBW oder LEV ist und dass die Kanalweite des kleinporigen Zeolithen in mindestens einer Dimension > 3,8 Ä (0,38 nm) ist und dass der kleinporige Zeolith Kupfer in einer Menge von 0,2 bis 3 Gew.-%, berechnet als Cu und Eisen in einer Menge von 0,2 bis 3 Gew.-%, berechnet als Fe, aufweist, jeweils bezogen auf das Gesamtgewicht des ausgetauschten kleinporigen Zeolithen, und wobei der kleinporige Zeolith außer Kupfer und Eisen kein weiteres Metall enthält.

2. Katalysator gemäß Anspruch 1, **dadurch gekennzeichnet, dass** der kleinporige Zeolith einen SAR-Wert von 1 bis 50 aufweist.

3. Katalysator gemäß Anspruch 1 oder 2, **dadurch gekennzeichnet, dass** der kleinporige Zeolith vom Strukturtyp ERI ist und einen SAR-Wert von 5 bis 15 aufweist.

4. Katalysator gemäß Anspruch 3, **dadurch gekennzeichnet, dass** das molare Verhältnis von Cu:Al 0,03 bis 0,10 ist.

5. Katalysator gemäß Anspruch 3 und/oder 4, **dadurch gekennzeichnet, dass** das molare Verhältnis von (Cu+Fe):Al 0,12 bis 0,2 ist.

6. Katalysator gemäß Anspruch 1 oder 2, **dadurch gekennzeichnet, dass** der kleinporige Zeolith vom Strukturtyp LEV ist und einen SAR-Wert von 20 bis 40 aufweist.

7. Katalysator gemäß Anspruch 6, **dadurch gekennzeichnet, dass** das molare Verhältnis von Cu:Al 0,15 bis 0,30 ist.

8. Katalysator gemäß Anspruch 6 und/oder 7, **dadurch gekennzeichnet, dass** das molare Verhältnis von (Cu+Fe):Al 0,32 bis 0,50 ist.

9. Katalysator gemäß einem oder mehreren der Ansprüche 1 bis 8, **dadurch gekennzeichnet, dass** er in Form einer Beschichtung auf einem Trägersubstrat vorliegt.

10. Katalysator gemäß Anspruch 9, **dadurch gekennzeichnet, dass** das Trägersubstrat ein Durchflusssubstrat oder ein Wandflussfilter ist.

11. Katalysator gemäß Anspruch 9 und/oder 10, **dadurch gekennzeichnet, dass** das Trägersubstrat ein SCR-katalytisch aktives Material umfasst, ausgewählt aus Cu- und/oder Fe-ausgetauschten zeolithischen Verbindungen und Mischoxiden, die Vanadium-, Titan- und Wolframverbindungen enthalten.

12. Katalysator gemäß einem oder mehreren der Ansprüche 1 bis 8, **dadurch gekennzeichnet, dass** er als Bestandteil eines Trägersubstrats vorliegt.

13. Katalysator gemäß Anspruch 12, **dadurch gekennzeichnet, dass** das Trägersubstrat ein Durchflusssubstrat oder ein Wandflussfilter ist.

14. Katalysator gemäß Anspruch 12 und/oder 13, **dadurch gekennzeichnet, dass** das Trägersubstrat mit einem katalytisch aktiven Material beschichtet ist.

15. Verfahren zur Reinigung von Abgas von mager betriebenen Verbrennungsmotoren, **dadurch gekennzeichnet, dass** das Abgas über einen Katalysator gemäß einem oder mehreren der Ansprüche 1 bis 14 geleitet wird.

16. System zur Reinigung von Abgas von mager betriebenen Verbrennungsmotoren, **dadurch gekennzeichnet, dass** es einen Katalysator gemäß einem oder mehreren der Ansprüche 1 bis 14, sowie einen Injektor für wässrige Harnstofflösung umfasst, wobei sich der Injektor vor dem Katalysator gemäß einem oder mehreren der Ansprüche 1 bis 14 befindet.

17. System gemäß Anspruch 18, **dadurch gekennzeichnet, dass** es einen Oxidationskatalysator, einen Injektor für wässrige Harnstofflösung und einen Katalysator gemäß einem oder mehreren der Ansprüche 1 bis 14 aufweist, wobei sich der Injektor vor dem Katalysator gemäß einem oder mehreren der Ansprüche 1 bis 14 befindet, und wobei als Oxidationskatalysator Platin auf einem Trägermaterial verwendet wird.

## Claims

1. Catalyst comprising a small-pore zeolite containing iron and copper with a maximum ring size of eight tetrahedral atoms, **characterized in that** the small-pore zeolite is of the structure type EAB, ERI, ESV, JBW or LEV and that the channel width of the small-pore zeolite is > 3.8 Å (0.38 nm) in at least one dimension and that the small-pore zeolite comprises copper in an amount of 0.2 to 3 wt.%, calculated as Cu, and iron in an amount of 0.2 to 3 wt.%, calculated as Fe, in each case based on the total weight of the exchanged small-pore zeolite, and wherein the small-pore zeolite does not contain any metal other than copper and iron.

2. Catalyst according to claim 1, **characterized in that** the small-pore zeolite has an SAR value of 1 to 50.

3. Catalyst according to claim 1 or 2, **characterized in that** the small-pore zeolite is of the structure type ERI and has an SAR value of 5 to 15.

4. Catalyst according to claim 3, **characterized in that** the molar ratio of Cu to Al is 0.03 to 0.10.

5. Catalyst according to claim 3 and/or 4, **characterized in that** the molar ratio of (Cu+Fe) to Al is 0.12 to 0.2.

6. Catalyst according to claim 1 or 2, **characterized in that** the small-pore zeolite is of the structure type LEV and has an SAR value of 20 to 40.

7. Catalyst according to claim 6, **characterized in that** the molar ratio of Cu to Al is 0.15 to 0.30.

8. Catalyst according to claim 6 and/or 7, **characterized in that** the molar ratio of (Cu+Fe) to Al is 0.32 to 0.50.

9. Catalyst according to one or more of claims 1 to 8, **characterized in that** it is present in the form of a coating on a carrier substrate.

10. Catalyst according to claim 9, **characterized in that** the carrier substrate is a flow-through substrate or a wall-flow filter.

11. Catalyst according to claim 9 and/or 10, **characterized in that** the carrier substrate comprises an SCR catalytically active material selected from Cu- and/or Fe-exchanged zeolitic compounds and mixed oxides which contain vanadium, titanium and tungsten compounds.

12. Catalyst according to one or more of claims 1 to 8, **characterized in that** it is present as part of a carrier substrate.

13. Catalyst according to claim 12, **characterized in that** the carrier substrate is a flow-through substrate or a wall-flow filter.

14. Catalyst according to claim 12 and/or 13, **characterized in that** the carrier substrate is coated with a catalytically active material.

15. Method for purifying exhaust gas of lean-operated combustion engines, **characterized in that** the exhaust gas is passed over a catalyst according to one or more of claims 1 to 14.

16. System for purifying exhaust gas from lean-operated combustion engines, **characterized in that** it comprises a catalyst according to one or more of claims 1 to 14 as well as an injector for aqueous urea solution, wherein the injector is located upstream of the catalyst according to one or more of claims 1 to 14.

17. System according to claim 18, **characterized in that** it comprises an oxidation catalyst, an injector for aqueous urea solution and a catalyst according to one or more of claims 1 to 14, wherein the injector is located upstream of the catalyst according to one or more of claims 1 to 14 and wherein platinum is used as oxidation catalyst on a carrier material.

## Revendications

1. Catalyseur comprenant une zéolithe microporeuse contenant du fer et du cuivre et ayant une taille d'anneaux maximale de huit atomes tétraédriques, **caractérisé par le fait que** la zéolithe microporeuse est une structure de type EAB, ERI, ESV, JBW ou LEV, et que l'ouverture du canal de la zéolithe microporeuse a au moins une dimension > 3,8 Å (0,38 nm), et que la zéolithe microporeuse contient du cuivre dans une quantité de 0,2 à 3 % en poids, calculé comme Cu, et du fer dans une quantité de 0,2 à 3 % en poids, calculé comme Fe, respectivement rapportées au poids total de la zéolithe microporeuse échangée, et où la zéolithe microporeuse ne contient pas d'autre métal que du cuivre et du fer.

2. Catalyseur selon la revendication 1, **caractérisé en ce que** la zéolithe microporeuse affiche une valeur SAR de 1 à 50.

3. Catalyseur selon la revendication 1 ou 2, **caractérisé en ce que** la zéolithe microporeuse est une structure de type ERI et affiche une valeur SAR de 5 à 15.

4. Catalyseur selon la revendication 3, **caractérisé en ce que** le rapport molaire de Cu:Al est de 0,03 à 0,10.

5. Catalyseur selon la revendication 3 et/ou 4, **caractérisé en ce que** le rapport molaire de (Cu+Fe):Al est de 0,12 à 0,2.

6. Catalyseur selon la revendication 1 ou 2, **caractérisé en ce que** la zéolithe microporeuse est une structure de type LEV et affiche une valeur SAR de 20 à 40.

7. Catalyseur selon la revendication 6, **caractérisé en ce que** le rapport molaire de Cu:Al est de 0,15 à 0,30.

8. Catalyseur selon la revendication 6 et/ou 7, **caractérisé en ce que** le rapport molaire de (Cu+Fe):Al est de 0,32 à 0,50.

9. Catalyseur selon une ou plusieurs des revendications 1 à 8, **caractérisé en ce qu'**il se présente sous la forme d'un revêtement sur un substrat porteur.

10. Catalyseur selon la revendication 9, **caractérisé en ce que** le substrat porteur est un substrat à écoulement traversant ou un filtre à paroi filtrante.

11. Catalyseur selon la revendication 9 et/ou 10, **caractérisé en ce que** le substrat porteur comprend un matériau SCR catalytiquement actif, sélectionné parmi des composés zéolithiques échangés avec Cu et/ou Fe, et des oxydes mixtes contenant des composés de vanadium, de titane et de tungstène.

12. Catalyseur selon une ou plusieurs des revendications 1 à 8, **caractérisé en ce qu'**il existe sous forme de composant d'un substrat porteur.

13. Catalyseur selon la revendication 12, **caractérisé en ce que** le substrat porteur est un substrat à écoulement traversant ou un filtre à paroi filtrante.

14. Catalyseur selon la revendication 12 et/ou 13, **caractérisé en ce que** le substrat porteur est revêtu d'un matériau catalytiquement actif.

15. Procédé d'épuration des gaz d'échappement rejetés par des moteurs à combustion à mélange pauvre, **caractérisé en ce que** les gaz d'échappement passent par un catalyseur selon une ou plusieurs des revendications 1 à 14.

16. Dispositif d'épuration des gaz d'échappement rejetés par des moteurs à combustion à mélange pauvre, **caractérisé en ce qu'**il comprend un catalyseur selon une ou plusieurs des revendications 1 à 14, ainsi qu'un injecteur pour solution aqueuse d'urée, dans lequel l'injecteur se trouve devant le catalyseur selon une ou plusieurs des revendications 1 à 14.

17. Dispositif selon la revendication 18, **caractérisé en ce qu'**un catalyseur d'oxydation comprend un injecteur pour solution aqueuse d'urée selon une ou plusieurs des revendications 1 à 14, dans lequel l'injecteur se situe devant le catalyseur selon une ou plusieurs des revendications 1 à 14, et où du platine est utilisé comme catalyseur d'oxydation sur le matériau porteur.
